# EUROPEAN PATENT SPECIFICATION

(11) **EP 0 539 121 B1**
(45) Date of publication and mention of the grant of the patent: **24.07.1996**
(21) Application number: 92309468.4
(22) Date of filing: 16.10.1992
(51) Int. Cl.: B01D 53/79

(54) **Gas scrubbers**
Gaswäscher
Laveurs de gaz

(30) Priority: 23.10.1991 US 781465
(43) Date of publication of application: 28.04.1993
(73) Proprietor: THE BABCOCK & WILCOX COMPANY, New Orleans, Louisiana 70160 (US)
(72) Inventor: Myers, Robert B., Copley, Ohio (US); Johnson, Dennis W., Barberton, Ohio (US); Amrhein, Gerald T., Louisville, Ohio (US)
(74) Representative: Pilch, Adam John Michael

(56) References cited:
- WO-A-91/02583
- DE-A- 2 617 053
- DE-A- 4 110 940
- DE-B- 2 150 835
- US-A- 4 980 099

## Description

The present invention relates to gas scrubbers which may be suitable for removing sulphur oxides and other contaminants contained in flue gas formed during the combustion of fossil fuels (such as coal, oil, petroleum or coke) and/or waste materials which are burned by electric power generating plants, refuse-to-energy plants and other industrial processes.

Previous proposals for the removal of sulphur oxides and/or other contaminants from a hot combustion exhaust gas, for example to comply with US federal and state emissions requirements include:
1. Utilizing fossil fuels low in sulphur content and/or other contaminants, the major disadvantage of this measure being increased fuel and freight costs as respectively dictated by supply/demand and proximity to the end user.
2. Reduction of the sulphur content and/or other contaminants in the fuel prior to combustion via mechanical and/or chemical processes, the major disadvantage being the cost effectiveness of the mechanical and/or chemical processing necessary to meet the levels of sulphur and/or other contaminants reduction required.
3. Mixing of dry alkali material with the fuel prior to combustion or injection of pulverized alkali material directly into the hot combustion gases to remove sulphur oxides and/or other contaminants via adsorption (for example LIMB, and Coolside Technologies as demonstrated by the present applicants and others), the major disadvantages being low to moderate removal efficiencies, poor reagent utilization and increased particulate loadings in the fuel gas which may necessitate the requirements for further flue gas conditioning (such as humidification or sulphur trioxide injection) when the injection process is conducted upstream of an electrostatic precipitator (ESP).
4. A wet chemical adsorption process (namely wet scrubbing) wherein the hot gas is typically washed in an up-flow gas liquid contact device with an aqueous alkaline solution or slurry to remove sulphur oxides and/or other contaminants, the major disadvantages being the loss of liquid both to the atmosphere (due to saturation of the flue gas and mist carryover) and with sludge produced in the process, the economics associated with the materials of construction for the absorber module and all related auxiliary equipment downstream (such as primary/secondary dewatering and waste water treatment subsystems). The present applicants are one of several manufacturers of wet scrubbers.
5. Spray drying chemical absorption (namely dry scrubbing) wherein an aqueous alkaline solution or slurry is finely atomized, typically via chemical, dual fluid or rotary cup type atomizers, and is sprayed into a hot flue gas to remove sulphur oxides and other contaminants, with the major disadvantages being moderate-to-high pressure drop across the spray dryer gas inlet distribution device and the limitation on spray down temperature (namely approach to flue gas saturation temperature) to maintain controlled operations.

The present applicants currently have two commercial horizontal co-current flow dry scrubber systems in operation at two electric power generating plants. The present applicants are the only known manufacturers of horizontal co-current flow dry scrubber systems for the electric utility industry. There are several major manufacturers of vertical co-current downflow dry scrubbing systems for the electric utility industry.

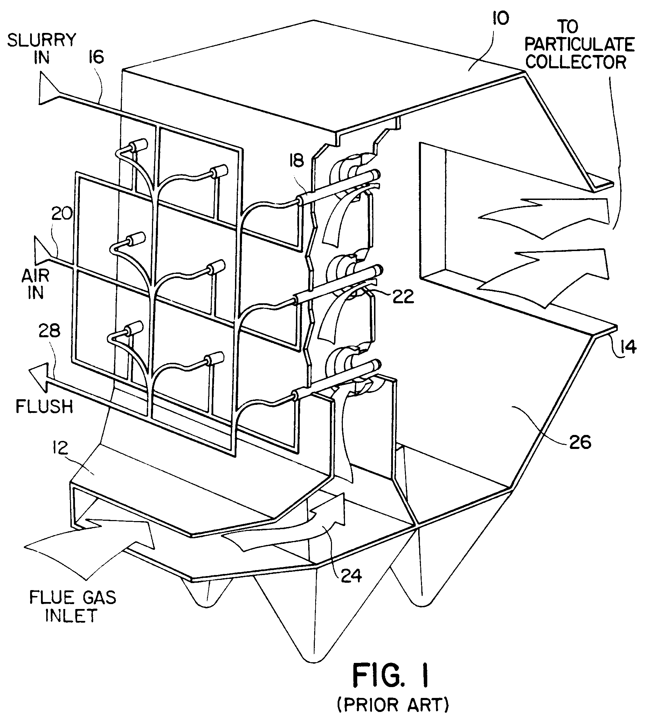

Figure 1 of the accompanying drawings is a perspective view, with portions removed, of a known horizontal co-current flow dry scrubber system available from the present applicants. The dry scrubber comprises a housing 10 having an inlet 12 for hot flue gas and an outlet 14 for supplying the particulate containing gases to a particulate collector. Slurry is supplied through an inlet 16 to a plurality of atomizers 18 which also receive pressurized air through an air inlet 20. A plurality of gas diffusers 22 co-operate with the outlet end of the atomizers 18 to help mix the incoming gas flow 24 with the slurry in a spray adsorption region 26 of the housing 10. Unused slurry is recycled through the system by a flush outlet 28.

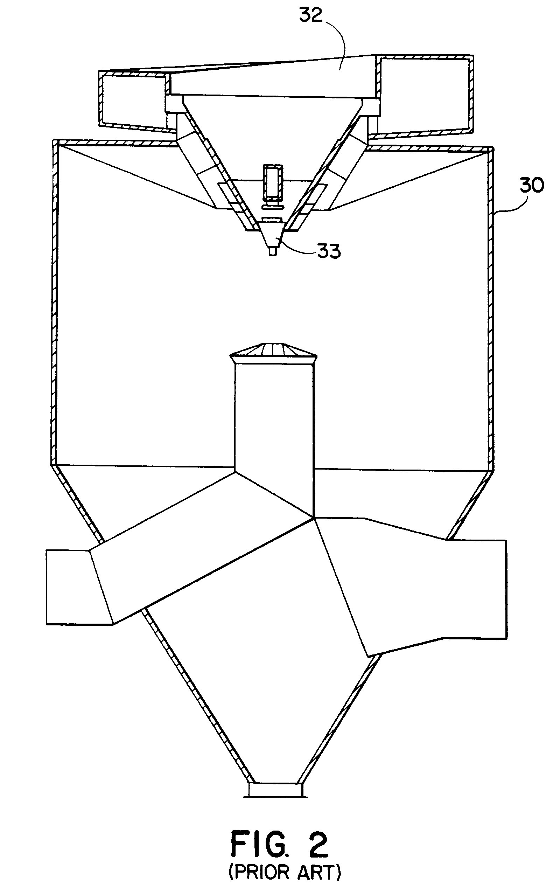

Figure 2 is a vertical sectional view of a known vertical co-current downflow dry scrubber. The vertical scrubber comprises a housing 30 with a roof mounted gas disperser 32 for mixing the flue gas with the slurry discharged from an atomizer 33.

US Patent US-A-4 980 099 discloses a horizontal dry scrubber provided with airfoil lance assemblies each arranged to spray a finely atomized reagent into the flue gas stream.

German Patent Application DE-A-2 617 053 also discloses a horizontal dry scrubber provided with nozzles for spraying reagent into the gas stream; in this case, upstream and downstream nozzles are arranged to have different spray rates, depending on the gas stream speed.

According to the present invention there is provided a co-current dry scrubber for discharging a solution or slurry containing a gas treatment composition into waste gas, the scrubber comprising:
a housing defining a chamber having a waste gas inlet for receiving waste gas and a treated gas outlet for discharging treated gas from the chamber; and
at least one atomizer array extending across the chamber and in the housing, the array including an airfoil member having a larger radius leading edge for facing oncoming gas entering through the waste gas inlet and a smaller radius trailing edge facing opposite to the leading edge, and at least one atomizer spaced along the airfoil member for discharging slurry from the trailing edge;
characterised in that:
the chamber extends vertically with the waste gas inlet being above the treated gas outlet; and
the treated gas outlet comprises a conduit extending substantially perpendicularly to the major axis of the chamber and has a downwardly facing intake for receiving gas and dried slurry from the chamber.

A preferred embodiment of the invention seeks to advance existing dry scrubber technology by reducing the pressure losses across the inlet/gas flow distribution device while simultaneously improving gas/liquid contact by homogeneously dispersing the sorbent into the gas stream, resulting in increased sulphur oxide/other contaminant removal efficiencies, increased reagent utilizations and improved scrubber operations.

The preferred embodiment comprises a vertical co-current down-flow dry scrubber module equipped with single or multiple arrays of atomizers housed in airfoil lance assemblies of the type disclosed in US Patent US-A-4 980 099. Hot flue gas enters the dry scrubber through the inlet section and is directed downwardly to the airfoil lance assemblies, which provide the most aerodynamically efficient shape possible both to distribute gas flow across the dry scrubber chamber uniformly by minimizing flow disturbances and to house a single or multiple array of atomizers and their associated supply piping.

The low pressure drop inlet section/airfoil lance assembly arrangement allows uniform distribution of the gas flow across the spray drying chamber, eliminating the need for the less efficient, high pressure drop diffuser shown in Figure 1 and the roof gas dispersers currently used for spray dryer inlet gas distribution as shown in Figure 2.

Accordingly, the preferred embodiment provides a dry scrubber having low pressure drop which is simple in design, rugged in construction and economical to manufacture.

The invention will now be described by way of example with reference to the accompanying drawings, throughout which like parts are referred to by like references, and in which:
Figure 1 is a perspective view with portions cut away of a known horizontal dry scrubber;
Figure 2 is a vertical sectional view of a known vertical dry scrubber;
Figure 3 is a vertical sectional view of a dry scrubber according to an embodiment of the present invention;
Figure 4 is a sectional view (taken along a line 4-4 of Figure 5) showing the construction of an airfoil lance array used in an embodiment of the present invention; and
Figure 5 is a partial perspective view of the airfoil lance array of Figure 4 with portions cut away.

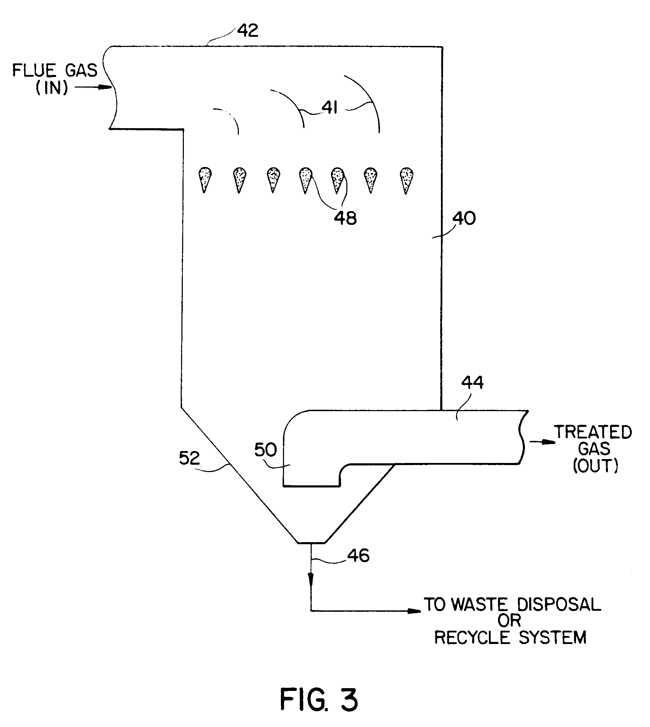

Referring to Figure 3 of the drawings, a vertical dry scrubber includes a housing 40 with an inlet 42 for flue gas which enters the chamber defined by the housing 40, and an outlet 44 for the treated gas.

A single or multiple array 48 of dual-fluid, airfoil mounted atomizers or lances spray a homogeneous distribution of a finely atomized alkali solution or slurry reagent into the hot flue gas stream to absorb sulphur oxides and/or other contaminants. Within seconds, the latent heat of the flue gas evaporates the liquid from the slurry droplets, which lowers the outlet gas temperature and produces a dry product. While Figure 3 depicts the airfoil lance array 48 directed downwardly in a planar arrangement, it should be understood that the airfoil lances may be directed in other directions such as towards a wall of the housing 40 and do not have to be planar, for example they can be staggered. A suitable alternative arrangement would have one or more airfoil lances staggered vertically from the other lances.

The treated gas continues to travel downwardly past the atomizer airfoil lance array 48, exiting the dry scrubbing chamber through the outlet 44 perpendicular to the downward direction of flow. Some of the spray dried product collects in a hopper 52 located at the base of the housing 40 and is subsequently discharged to an ash removal system through a waste outlet 46. For some embodiments, at least one diverting vane 41 or other air distribution device may be provided in the chamber between the inlet 42 and the airfoil lance array 48 to redirect and distribute the flue gas. The outlet 44 has a downwardly facing intake 50 from the chamber.

Because the alkali solution or slurry reagent is homogeneously dispersed into the gas stream, lower spray down temperatures (namely a lower approach to saturation) are achievable than with the previous scrubber designs, which improves reagent utilization and the removal efficiencies in respect of sulphur oxides and other contaminants.

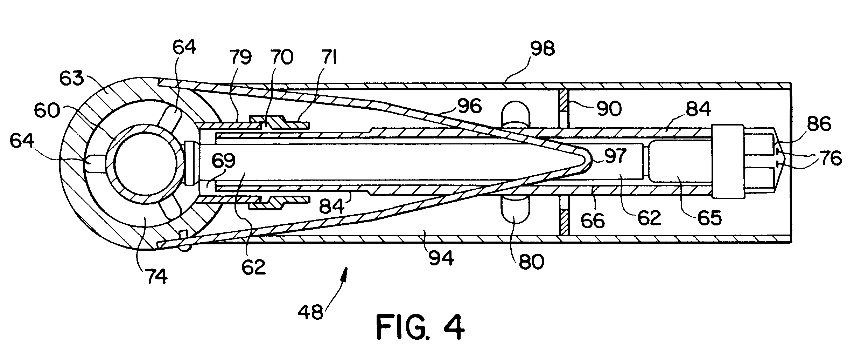

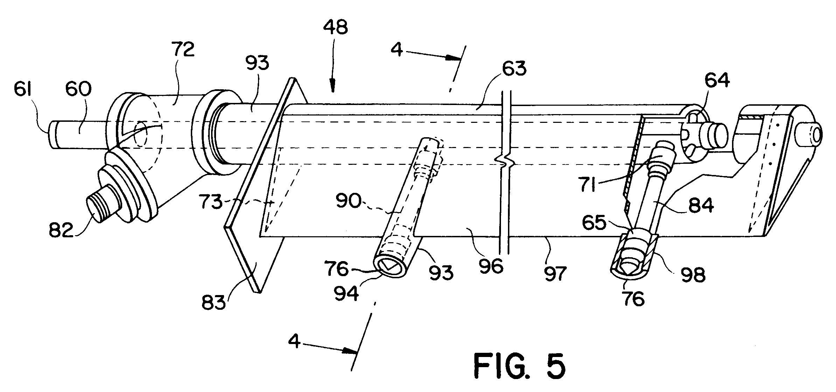

Figures 4 and 5, which correspond respectively to Figures 2 and 3 in US Patent US-A-4 980 099 illustrate a representative atomizer lance array 48.

Water or sorbent to be atomized enters an inner header manifold 60, at a port 61. The inner header manifold 60 supplies the water or sorbent to one or more atomizer mix chambers 65, via a respective inner barrel 62.

The inner header manifold 60 is positioned by spacers 64 concentrically within an outer header manifold 63 which forms the leading edge of the airfoil lance apparatus. Atomizing gas enters a service supply lateral 72, through an atomizing gas inlet port 82, which directs the air to an annular space 74 formed between the inner header manifold 60 and the outer header manifold 63. The gas flows through this annular space 74 and subsequently to the atomizer mix chamber(s) 65 by entering, through an inlet port 69, a further annular space 66 formed between the inner barrel 62 and an outer barrel 84 held by alignment spacers 80. The homogenized mixture of the gas, liquid and/or solids exits the atomizer mix chamber 65, and subsequently nozzle openings 76 of an atomizer end cap 86.

The or each outer barrel 84 is held to the outer header manifold 63 by a respective set of a packing gland 79, an O-ring 70 and a packing gland nut 71.

Atomizer shield gas enters through a shield gas port 73 in a mounting plate 83 and is ducted through a passageway bounded in part by the outer header manifold 63 and an airfoil skin 96 which is fixed to the outer header manifold 63. Subsequently the shield gas flows over the atomizer end cap 86 by entering an annular space 94 formed between the outer barrel 84 and a nacelle housing 98 extending from a trailing edge 97 of the airfoil skin 96. Uniform distribution of shield gas flow among the plurality of atomizers is accomplished through the use of a uniquely sized flow distribution orifice 90 within the interior wall of each nacelle housing 98.

The advantages of the arrangement include:
1. Low gas side pressure drop across the vertical, co-current down flow dry scrubber due to the utilization of the airfoil lance concept both to house aerodynamically the atomizers and their associated supply piping and to straighten/distribute the bulk gas flow in the dry scrubbing chamber.
2. The ability to increase sulphur oxides and other contaminant removal efficiencies and reagent utilization by operating at lower outlet gas temperatures (that is, a lower approach to saturation).
3. Lower overall pressure drop, resulting in lower operating costs. The life-cycle cost for a 500-600 MW boiler FGD System is typically evaluated at US $500,000 to US $1,500,000 per inch water gauge (250 Pa) of pressure drop. Pressure drop reductions of one (1) to two (2) inches water gauge (250 to 500 Pa) or greater could be expected for an FGD System of this size.
4. The simplicity of the design results in lower capital cost by eliminating complex gas distribution devices such as diffusers or roof gas dispersers currently used in dry scrubber designs.
5. Flue gas temperature stratification/flow imbalances can be better accommodated by controlling the atomized alkali solution or slurry reagent flow to individual nozzles in the atomizer array. This control concept can be done automatically on line by measuring the gas flow and upstream or downstream temperature profile.
6. Use of more efficient, lower capacity nozzles resulting in improved atomization quality or the same atomization quality with less energy required as compared to conventional dry scrubbing atomizers.
7. There is no need for any moving internal components.
8. The apparatus is simple to operate.

## Claims

1. A co-current dry scrubber for discharging a solution or slurry containing a gas treatment composition into waste gas, the scrubber comprising:
a housing (40) defining a chamber having a waste gas inlet (42) for receiving waste gas and a treated gas outlet (44) for discharging treated gas from the chamber; and
at least one atomizer array (48) extending across the chamber and in the housing (40), the array (48) including an airfoil member having a larger radius leading edge (63) for facing oncoming gas entering through the waste gas inlet (42) and a smaller radius trailing edge (97) facing opposite to the leading edge (63), and at least one atomizer (76) spaced along the airfoil member for discharging slurry from the trailing edge (97);
characterised in that:
the chamber extends vertically with the waste gas inlet (42) being above the treated gas outlet (44); and
the treated gas outlet (44) comprises a conduit extending substantially perpendicularly to the major axis of the chamber and has a downwardly facing intake (50) for receiving gas and dried slurry from the chamber.

2. A scrubber according to claim 1, including a hopper (52) connected to a lower end of the housing (40) and a waste outlet (46) at the bottom of the hopper (52) for discharging dried slurry solids/particulate material which settle out of the waste gas.

3. A scrubber according to claim 1 or claim 2, including at least one solids/particulate material diverting vane (41) in the chamber between the waste gas inlet (42) and the atomizer array (48) for directing the waste gas from the inlet (42) in a direction substantially parallel to the airfoil member from the larger to the smaller radius edges (63,97) thereof.

## Patentansprüche

1. Gleichstromtrockenwäscher zur Abgabe einer Lösung oder eines Schlammes in Abgas, die eine Zusammensetzung zur Gasbehandlung enthalten, wobei der Wäscher aufweist:
ein Gehäuse (40), das eine Kammer mit einem Abgaseinlaß (42) definiert, um Abgas aufzunehmen, und einen Auslaß (44) für behandeltes Gas, um behandeltes Gas von der Kammer abzugeben; und
mindestens eine Zerstäubergruppierung (48), die sich über die Kammer und in dem Gehäuse (40) erstreckt, wobei die Gruppierung (48) ein Flügelteil aufweist, das eine Vorderkante (63) mit einem größeren Radius hat, um ankommendem Gas gegenüber zu liegen, das durch den Abgaseinlaß (42) eintritt, und eine hintere Kante (97) mit einem kleineren Radius, die der Vorderkante (63) gegenüberliegt, und mindestens einen Zerstäuber (76), der im Abstand entlang des Flügelteils angeordnet ist, um Schlamm von der hinteren Kante (97) abzugeben;
**dadurch gekennzeichnet, daß**
sich die Kammer vertikal erstreckt, wobei sich der Abgaseinlaß (42) oberhalb des Auslasses (44) für behandeltes Gas befindet; und
der Auslaß (44) für behandeltes Gas eine Leitung aufweist, die sich im wesentlichen senkrecht zu der Hauptachse der Kammer erstreckt und einen nach unten zugekehrten Einlaß (50) hat, um Gas und getrockneten Schlamm von der Kammer aufzunehmen.

2. Wäscher nach Anspruch 1 mit einem Trichter (52), der mit einem unteren Ende des Gehäuses (40) und einem Abfallauslaß (46) am Boden des Trichters (52) verbunden ist, um getrocknete Schlammfestteile/Partikelmaterial abzugeben, das sich von dem Abgas abgesetzt hat.

3. Wäscher nach Anspruch 1 oder Anspruch 2 mit mindestens einer die Feststoffe/Partikelmaterial verteilenden Schaufel (41) in der Kammer zwischen dem Abgaseinlaß (42) und der Zerstäubergruppierung (48), um das Abgas von dem Einlaß (42) in einer im wesentlichen parallelen Richtung zu dem Flügelteil von dessen Kante mit größerem Radius zu der Kante mit kleinerem Radius (63,97) zu leiten.

## Revendications

1. Laveur par voie sèche à contre courant pour décharger une solution ou une boue contenant une composition de traitement de gaz dans un gaz résiduaire, le laveur comprenant :
un bâti (40) définissant une chambre ayant une entrée de gaz résiduaire (42) pour recevoir du gaz résiduaire et une sortie de gaz traité (44) pour décharger le gaz traité en provenance de la chambre ; et
au moins un agencement d'atomiseurs (48) s'étendant à travers la chambre et dans le bâti (40), l'agencement (48) comprenant un organe à profil d'aile ayant un bord antérieur à rayon (63) plus grand pour faire face au gaz entrant en sens inverse par l'entrée de gaz résiduaire (42) et un bord postérieur à rayon plus petit (97) faisant face à l'opposé du bord antérieur (63), et au moins un atomiseur (76) espacé le long de l'organe à profil d'aile pour décharger la boue à partir du bord postérieur (97) ;
caractérisé en ce que :
la chambre s'étend verticalement avec l'entrée du gaz résiduaire (42) située au dessus de la sortie du gaz traité (44); et
la sortie du gaz traité (44) comprend un conduit s'étendant substantiellement perpendiculairement au grand axe de la chambre et possède une admission (50) faisant face vers le bas pour recevoir du gaz et de la boue séchée en provenance de la chambre.

2. Laveur selon la revendication 1, comprenant une trémie (52) reliée à une extrémité inférieure du bâti (40) et une sortie de déchets (46) au bas de la trémie (52) pour évacuer les solides en boue/ le matériau à particules qui se déposent à partir du gaz résiduaire.

3. Laveur selon la revendication 1 ou 2, comprenant au moins une vanne de dérivation (41) de solides / de matériau à particules dans la chambre entre l'entrée de gaz résiduaire (42) et l'agencement d'atomiseurs (48) pour diriger le gaz résiduaire de l'entrée (42) dans une direction substantiellement parallèle à l'organe à profil d'aile de son bord à plus grand rayon (63) vers son bord à plus petit rayon (97).
